(19)

Europäisches
Patentamt
European
Patent Office
Office européen
des brevets

(11) **EP 4 715 512 A1**

(12) **EUROPEAN PATENT APPLICATION**

(43) Date of publication:
**25.03.2026 Bulletin 2026/13**

(21) Application number: **25195662.9**

(22) Date of filing: **13.08.2025**

(51) International Patent Classification (IPC):
**G05D 1/644** (2024.01)  **G05D 1/698** (2024.01)
**B64C 39/02** (2023.01)  **G05D 1/689** (2024.01)
**G05D 105/55** (2024.01)  **G05D 109/25** (2024.01)

(52) Cooperative Patent Classification (CPC):
**G05D 1/644; B64C 39/024; G05D 1/689;
G05D 1/6983;** G05D 2105/55; G05D 2109/254

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **23.09.2024 US 202418893394**

(71) Applicant: **GE Aviation Systems LLC
Grand Rapids, MI 49512 (US)**

(72) Inventors:
• **TAN, Yew Teck
  Niskayuna, 12309 (US)**
• **FLENNER, Arjuna
  Grand Rapids, 49512 (US)**
• **CHEN, Austin Ku
  San Diego, 92127 (US)**

(74) Representative: **Openshaw & Co.
8 Castle Street
Farnham, Surrey GU9 7HR (GB)**

(54) **METHOD OF DECENTRALIZED COLLABORATIVE TARGET SEARCHING AND TARGET TRACKING**

(57) A method of decentralized collaborative target searching, target tracking, or both, includes initializing a probability distribution over a probabilistic search area (100) with an a priori probability distribution of target locations (302), transmitting the probability distribution to a plurality of vehicles (102A, 104A, 106A, 200, 304), capturing, using a plurality of sensors (304A) on the plurality of vehicles (102A, 104A, 106A, 200, 304), sensor data relating to locations of a target, updating the a priori probability distribution (302) based on the sensor data or based on data observations (600) outside of the plurality of vehicles (102A, 104A, 106A, 200, 304), or both, to provide an updated probability distribution, determining optimal trajectories (102, 104, 106) for the plurality of vehicles (102A, 104A, 106A, 200, 304) using the updated probability distribution and using an ergodic principle to define optimality and based on each vehicle (102A, 104A, 106A, 200, 304) of the plurality of vehicles (102A, 104A, 106A, 200, 304) calculating its own optimal trajectory (102, 104, 106) to enable decentralized calculations, and detecting or tracking, or both, the target based on the determining of the optimal trajectories (102, 104, 106).

FIG. 3

**Description**

TECHNICAL FIELD

The present disclosure relates generally to a method of decentralized collaborative target searching and/or target tracking.

BACKGROUND

Vehicles, including aircraft (e.g., unmanned aerial vehicles - UAVs) are often used in search and rescue missions or for target identification. Many strategies can be used to locate and/or to identify a target. For example, a plurality of vehicles can be used to search for the target. Conventionally, a search area is often divided into a grid of a plurality of zones. For example, each vehicle of the plurality of vehicles can be assigned to search a specific zone of the plurality of zones. This process may not be efficient, however, as the plurality of vehicles communicate search location and status to a single central unit or node. This may create a bottleneck of centralized control where the central unit or node coordinates the operation of the plurality of vehicles.

BRIEF DESCRIPTION OF THE DRAWINGS

Features and advantages will be apparent from the following, more particular, description of various exemplary embodiments, as illustrated in the accompanying drawings, wherein like reference numbers generally indicate identical, functionally similar, and/or structurally similar elements.

FIG. 1 is an example of a map of a probabilistic search area along with trajectories of a plurality of vehicles assigned to search the search area, according to an embodiment of the present disclosure.
FIG. 2 depicts an example of decentralized collaborative searching and tracking implemented using a plurality of vehicles, according to an embodiment of the present disclosure.
FIG. 3 is a schematic diagram of a system architecture for implementing the method of optimizing a detection or a searching and a target tracking of moving targets or stationary targets using moving search vehicles, according to an embodiment of the present disclosure.
FIG. 4A shows a plot of a trajectory of a single vehicle in two-dimensional space, according to an embodiment of the present disclosure.
FIG. 4B shows a plot of a trajectory of the single vehicle in the two-dimensional space, along with an induced path score, according to an embodiment of the present disclosure.
FIG. 4C shows a plot of a trajectory of two vehicles in two-dimensional space, according to an embodiment of the present disclosure.
FIG. 4D shows a plot of a trajectory of the two vehicles in the two-dimensional space, along with an induced path score, according to an embodiment of the present disclosure.
FIG. 5 is a plot of a predicted trajectory using a Gaussian Process (GP) regression, according to an embodiment of the present disclosure.
FIG. 6 is a block diagram of the two main components used for target prediction and trajectory generation (Gaussian Mixture Model and agent or vehicles), and the information that flows between the components for a single time step, according to an embodiment of the present disclosure.
FIG. 7 is a block diagram of a computer system shown in FIG. 3, according to an embodiment of the present disclosure.

DETAILED DESCRIPTION

Features, advantages, and embodiments of the present disclosure are set forth or apparent from a consideration of the following detailed description, drawings, and claims. Moreover, the following detailed description is exemplary and intended to provide further explanation without limiting the scope of the disclosure as claimed.
Various embodiments of the present disclosure are discussed in detail below. While specific embodiments are discussed, this is done for illustration purposes only. A person skilled in the relevant art will recognize that other components and configurations may be used without departing from the present disclosure.
The present method addresses the challenge of decentralized collaborative searching and target tracking, where a group of vehicles search for and/or track targets of interest within a given mission area. A probabilistic modeling approach is adopted to represent both the search area and possible locations of the targets, offering a consistent evaluation space for optimization. A decentralized path planning algorithm is provided to trade-off and/or balance between the search area and the target tracking objective, utilizing the ergodicity metrics. The resultant framework is resilient to bandwidth limitation. The resultant framework is also flexible to adding or removing vehicles.

In an embodiment, each vehicle in a plurality of vehicles is equipped with a sensor to detect and to track targets. Each vehicle broadcasts signals and receives sensing information from neighboring vehicles in a communication network. The communication network forms a fully connected graph. The plurality of vehicles can plan their own path based on the latest information from the target and based on locations of other agents. A path planning algorithm of the vehicle is used to balance between searching areas with a potential target, or tracking a previously detected target. The trade-off can either be users/operator specified, or according to some optimization criterion or criteria. For example, the optimization criterion or criteria can be used to maximize a number of new target detection (exploration), and/or to persistently track a target once the target is found (exploitation), probabilistic modeling approach (for example, a Gaussian mixture model) with regression can be employed to predict future trajectory of the target along with an associated uncertainty of the trajectory, based on past observations of the trajectory. This approach also allows desired search locations to be represented as probabilistic models with user-specified importance along with the associated uncertainties of the desired search locations.

The planning of the path of the vehicle can be fully decentralized. Each vehicle can be assigned a unique identifier (ID) informing a priority of the vehicle and also informing that the path planning happens sequentially according to the priority of the vehicle. In an embodiment, a first vehicle selects a first trajectory and broadcasts a path score of the first trajectory of the first vehicle to the plurality of vehicles (e.g., a group of vehicles). A second vehicle (subsequent vehicle) incorporates a path score of the first trajectory of the first vehicle (previous agent) when planning a second trajectory of the second vehicle. This provides the ability for the second vehicle to avoid searching the same area or tracking the same target as did the first vehicle. The resultant collaborative approach ensures the plurality of vehicles coordinate their effort between searching and tracking.

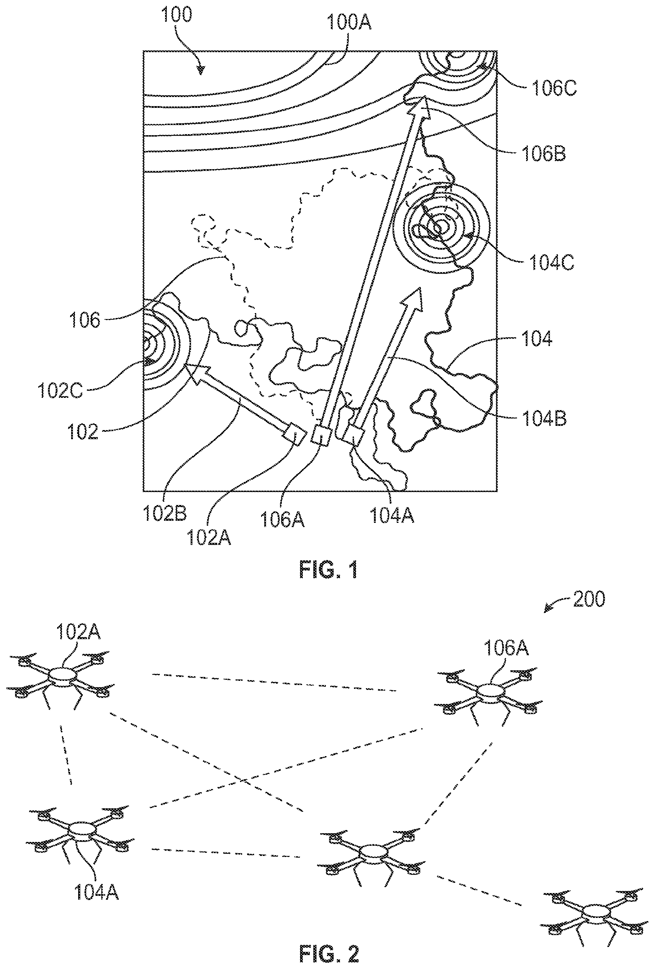

FIG. 1 is an example of a map of a probabilistic search area 100 along with trajectories 102, 104, and 106 of a plurality of vehicles (not shown) assigned to search the probabilistic search area, according to an embodiment of the present disclosure. The probabilistic search area 100 is shown in FIG. 1 as a contour map with contour lines 100A representing iso-probabilities of locating a search target in the probabilistic search area 100. Each contour line of the contour lines 100A corresponds to a certain probability value. In the example shown in FIG. 1, three trajectories 102, 104, and 106 of three vehicles 102A, 104A and 106A, respectively, are shown. Each trajectory 102, 104, and 106 corresponds to a corresponding trajectory of a vehicle 102A, 104A, and 106A, respectively. Each vehicle 102A, 104A, and 106A may be sent to search for the target, as indicated by arrows 102B, 104B, and 106B. Each vehicle 102A, 104A, and 106A follows a path or a trajectory 102, 104, and 106, respectively, and reports its location to other vehicles, as well as reports a probability of locating the target along the trajectory 102, 104, and 106.

As shown in FIG. 1, a probability of locating a target along trajectory 102, 104, and 106 by the vehicle 102A, 104A, and 106A, respectively, corresponding to a trajectory score is represented with iso-probability contour lines. For example, for the vehicle 102A following trajectory 102, the probability of finding the target is represented by a trajectory score 102C, shown as contour lines. Similarly, for the vehicle 104A following trajectory 104, the probability of finding the target is represented by a trajectory score 104C, shown as contour lines. For the vehicle 106A following trajectory 106, the probability of finding the target is represented by a trajectory score 106C, shown as contour lines. In an embodiment, the respective trajectory score 102C, 104C, and 106C corresponds an ergodicity score. In general, ergodicity expresses the idea that many repeated samples over time reproduces the same statistics as many samples at one point in time. For the collaborative search problem, this means the system trajectories follow a probability distribution given by a priori knowledge of the environment such that the time average as the system moves matches the a priori distribution average. It is non-ergodic if the time average and distribution average is different. Although three vehicles 102A, 104A, and 106A are described herein, any number of vehicles (e.g., one or more vehicles) can be used.

In an embodiment, each vehicle 102A, 104A, and 106A is equipped with a sensor to detect and to track targets. Each vehicle 102A, 104A, and 106A broadcasts signals and receives sensing information from neighboring vehicles 102A, 104A, and 106A in a distributed manner. The term "neighboring" is used in a graphical sense where two vehicles are neighbors if they have established a communication link between the vehicles. The plurality of vehicles 102A, 104A, and 106A can plan or calculate their own path or trajectory 102, 104, and 106 based on the latest information from the target and based on locations of other vehicles 102A, 104A, and 106A. For example, the vehicle 102A can plan its trajectory 102 based on latest information from the target located in the probabilistic search area 100.

In an embodiment, a path planning algorithm for each vehicle 102A, 104A, and 106A is used to balance between searching areas with potential targeting or tracking a previously detected target. The balancing between searching areas with tracking a previously detected target can either be user/operator specified, or can also be performed according to preset optimization criterion or criteria. For example, the preset optimization criterion or criteria can be based on maximizing a number of new target detection (exploration). The preset optimization criteria can also be based on persistently track a target once the target is found.

In an embodiment, a probabilistic modeling approach (for example, a Gaussian mixture model) with regression can be employed to predict a future trajectory of the target along with an associated uncertainty of the trajectory 102, 104, and 106, based on past observations of position of the vehicles 102A, 104A, and 106A. This approach also allows desired search locations, for example, probabilistic search area 100, to be represented as a probabilistic model with user-specified importance along with the associated uncertainties of the desired search locations.

In an embodiment, the representation of the probabilistic search area 100 enables a path or a trajectory planning algorithm to balance the search and track in a consistent manner. In addition, the planning of the path or the trajectory of a vehicle 102A, 104A, and 106A can be fully decentralized. Each vehicle 102A, 104A, and 106A can be assigned a unique identifier (ID). The unique ID can be used to provide information on a priority of the vehicle 102A, 104A, and 106A. The unique ID can also be used to ensure that trajectory planning happens sequentially according to a priority of the vehicle 102A, 104A, and 106A.

FIG. 2 depicts an example of decentralized collaborative searching and tracking implemented using a plurality of vehicles 200, according to an embodiment of the present disclosure. For example, as depicted in FIG. 2, the plurality of vehicles can be UAVs. The plurality of vehicles, including vehicles 102A, 104A and 106A, are configured to search for and to track targets of interest inside a given probabilistic search area 100 or a mission area (shown in FIG. 1). A probabilistic modeling approach is adopted to represent both the probabilistic search area 100 and possible locations of the targets, offering a consistent evaluation space for optimization. The decentralized path planning algorithm is provided to trade-off and/or to balance between the search area and the target tracking objective, utilizing the ergodicity metrics. The ergodicity metric is utilized by using given probability functions and calculating the sample average of the plurality of vehicles performing the search and tracking tasks and comparing that with the distributional average calculatable from the a priori probability distributions. The resultant framework is resilient to bandwidth limitation. For example, more vehicles can be added without adding demand in communication bandwidth as data communication occurs between vehicles in the network and data communication is not routed to a single node in the network. The resultant framework is also flexible to adding or removing vehicles.

In an embodiment, a first vehicle (e.g., vehicle 102A) of the plurality of vehicles 200 selects a first trajectory 102 and broadcasts a trajectory score 102C of the first trajectory 102 (shown in FIG. 1) of the first vehicle 102A to the remaining plurality of vehicles 104A and 106A. A second vehicle 104A (subsequent vehicle) incorporates the trajectory score 102C of the trajectory 102 (shown in FIG. 1) of the first vehicle 102A when planning the trajectory 104 of the second vehicle 104A. This method provides the ability for the second vehicle 104A to avoid searching the same area or tracking the same target as did the first vehicle 102A. The resultant collaborative approach ensures the plurality of vehicles 102A, 104A, and 106A balance their efforts between searching and tracking.

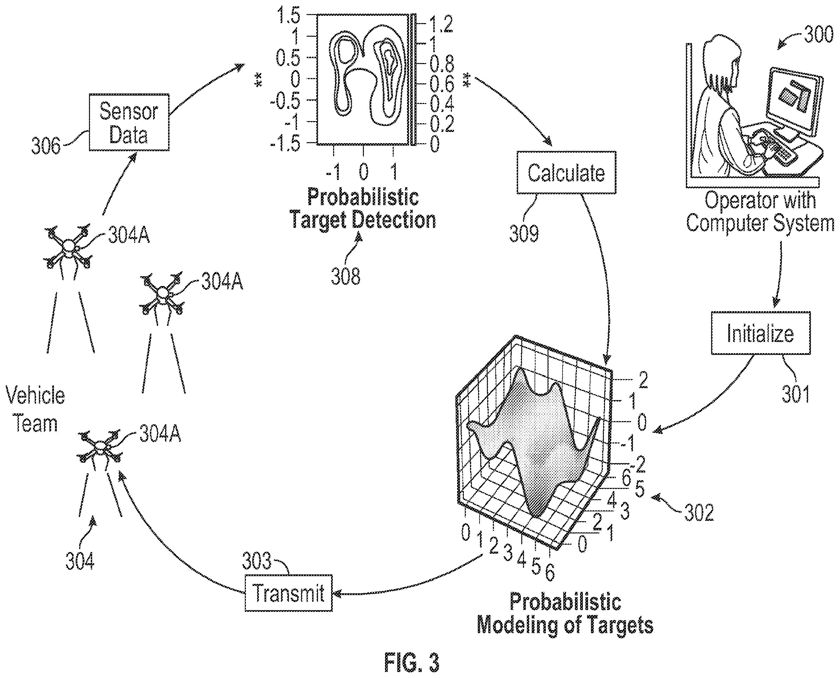

FIG. 3 is a schematic diagram of a system architecture for implementing the present method of optimizing a detection or a searching and a tracking of moving targets or stationary targets using moving search vehicles, according to an embodiment of the present disclosure. The method includes initializing, at 301, using a computer system 300, a probability distribution over a probabilistic search area 100 (shown in FIG. 1) with an a priori probability distribution of target locations 302. Transmitting, at 303, by the computer system 300, the probability distribution of target locations 302 to the plurality of vehicles 304 (e.g., vehicles 102A, 104A, and 106A shown in FIG. 1). The method includes receiving by the plurality of vehicles 304 the probability distribution of target location 302. The method includes capturing, using a plurality of sensors 304A on the plurality of vehicles 304 sensor data 306, the sensor data 306 relating to locations of a target. The method includes updating the probability distribution of target locations based on the sensor data 306 from the vehicles 304 to obtain updated probability distribution of target locations 308. The method further includes calculating, at 309, optimal paths or trajectories (e.g., trajectories 102, 104, and 106 shown in FIG. 1) for the plurality of vehicles 304 using the updated probability distribution of target locations 308 and using an ergodic principle to define optimality. The ergodic principle is when the sample or time average equals the distributional average. In this case, the samples are drawn from the same distribution that is used to calculate the distributional average. An ergodic-optimal solution means a sampling strategy was used such that the samples average matched the distributional average. The calculation of the optimal paths or the trajectories (e.g., trajectories 102, 104, and 106) are decentralized, such that each vehicle (e.g., vehicle 102A, 104A, and 106A shown in FIG. 1) of the plurality of vehicles 304 calculates its own optimal trajectory or path. The method includes detecting and/or tracking the target based on the decentralized calculations of the optimal paths or trajectories. The method further includes storing a result of the detecting or tracking on a storage device or transmitting the result to a requesting source for further consumption. For example, the requesting source may an entity that requested the search and/or tracking be performed.

In an embodiment, the method may further include, instead of or in addition to, updating the probability distribution of target locations based on the sensor data from the vehicles 304 to obtain updated probability distribution of target locations 308. The method includes updating the probability distribution of target locations with data observations outside of the plurality of the vehicles 304. In another embodiment, the method includes updating the updated probability distribution of target locations 308 with observations outside of the vehicles 304, or other probability distributions.

The search vehicle may include, but not limited to, an aircraft, manned or unmanned (e.g., a drone), a ground vehicle (e.g., a car, a truck, etc.), manned or unmanned, a floating vehicle such as a boat or a hovercraft, manned or unmanned, or a submarine, manned or unmanned. The target may include, but not be limited to, a lost person in a desert or a forest, or a person swept by a snow avalanche, a soldier or a group of soldiers, a moving asset, etc.

An example application includes a search and rescue mission where the targets can be people lost in the desert. The vehicles can be UAVs (drones) flying overhead and searching for the lost people. For example, the a priori probability can be derived from the last known location of the individuals (target) and an estimate on how far the individuals can travel since the individuals were last seen or detected. Furthermore, the individuals (target) can be ranked according to importance using a probability distribution. The ergodic search plans paths to search for the lost individuals, such that the total time the drones search a desert region is proportional to the probability distribution of that region.

By using the above method, the vehicle (UAV or drone) is able to, on average, more accurately image a wide swath of land in a shorter period of time to search and/or to track a target. As a result, the amount of processing by the vehicle is decreased, which ultimately decreases the need for a larger battery for the vehicle or for recharging the battery. This, therefore, results in a reduced need for processing power. Each of operations of searching or tracking ability may then increase without putting a demand strain on power consumption.

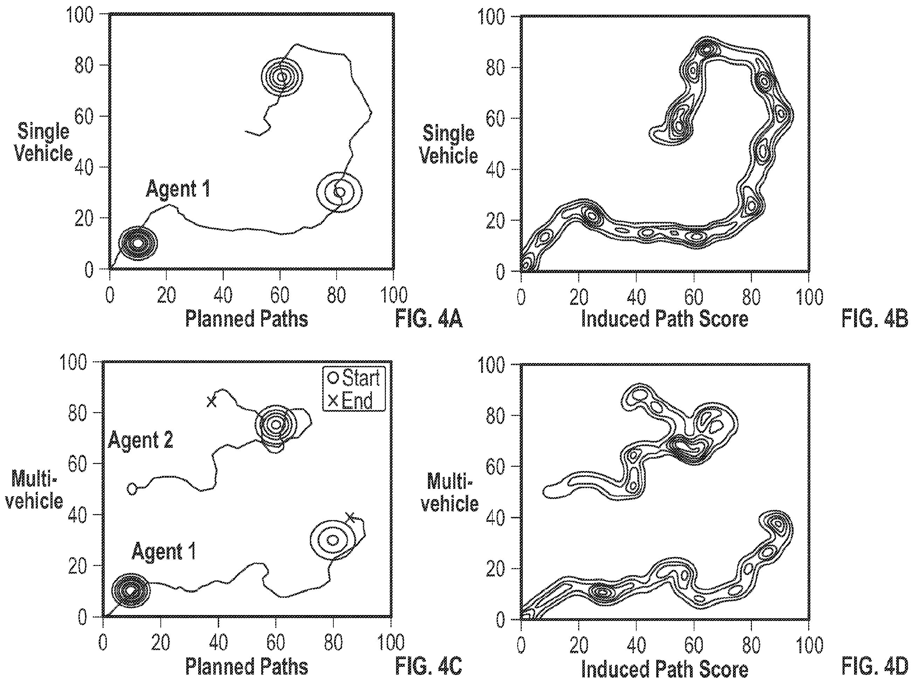

FIG. 4A shows a plot of a trajectory of a single vehicle in a two-dimensional space, according to an embodiment of the present disclosure. Overlayed on top of the trajectory of one vehicle is a probability of finding a target represented by a trajectory score shown as contour lines. FIG. 4B shows a plot of a trajectory of a single vehicle in a two-dimensional space along with an induced path score, according to an embodiment of the present disclosure. The trajectory score is shown as a shadow path with some regions along the path highlighted, showing an increased score.

FIG. 4C shows a plot of a trajectory of two vehicles in two-dimensional space, according to an embodiment of the present disclosure. Overlayed on top of the trajectory of the two vehicles are respective probabilities of finding a target represented by a trajectory score, shown as contour lines. FIG. 4D shows a plot of a trajectory of two vehicles in the two-dimensional space, along with an induced path score, according to an embodiment of the present disclosure. The trajectory score is shown as a shadow path with some regions along the path highlighted, showing an increased score for each of the two vehicles.

The following paragraphs describe the technical implementation of the method described above, in a form of an algorithm that implements a series of collaborative searching and tracking algorithms. The algorithm discussed here is a novel sampling-based approach that uses predicted target tracks to enable better tracking of moving targets, while balancing searching and tracking through a user-defined parameter.

In an embodiment, the challenge of collaborative searching and tracking is tackled. A study is performed where a plurality of agents (vehicles) search for and track targets of interest inside an environment $\varepsilon \epsilon \mathbb{R}^2$. There is no restriction on the movement of the targets or the number of targets in the environment. In an embodiment, the search agents (vehicles) are subject to dynamic constraints, such as a minimum speed or a maximum speed and/or an allowed turning radius. Each agent (vehicle) is equipped with a sensor used to detect and to track targets. The algorithm may or may not incorporate any prior knowledge information. The prior knowledge information may, for example, include the likelihood of targets appearing in one region of the search environment.

In an embodiment, the method of target searching and tracking proceeds in two major steps. First, target observations (which may be noisy) are processed into a predictive model. The term "target noisy observations" includes all sources of error including, but not limited to, error arising due to observation noise, errors in vehicle pose estimation, error in target location estimation, timing errors, etc. The predictive model is used to select trajectories for the agents (vehicles) to achieve target searching and/or target tracking to user specifications.

Once a target is within a detection radius $r^D$ of an agent (a vehicle), the target is observed by the agent (vehicle). For a target $j$ at a time $t$, this generates an observation $o_t^j$. These observations are passed into a Gaussian Process (GP) regression to predict a future motion of targets. Each target has two associated GP regressions (one for each dimension) and maintains a fixed-size buffer of the most recent observations. Input features are normalized and the kernel parameters are selected using maximum likelihood estimation (MLE). Kernel parameters are any parameters estimated with the a priori covariance kernel used in a Gaussian process. In statistics, maximum likelihood estimation (MLE) is a method of estimating the parameters of an assumed probability distribution, given some observed data. This is achieved by maximizing a likelihood function so that, under the assumed statistical model, the observed data is most probable. In an embodiment, a non-stationary kernel can be used so that prediction uncertainty grows unbounded over time.

The GP regressions are fitted with the produced observations. The GP regressions can then be queried at any point in time for both a prediction location and the standard deviation associated with that prediction. For a target $j$ at a time $t$, this prediction can be written as a mean $\tilde{\mu}_t^j$ and a covariance $\tilde{\Sigma}_t^j$.

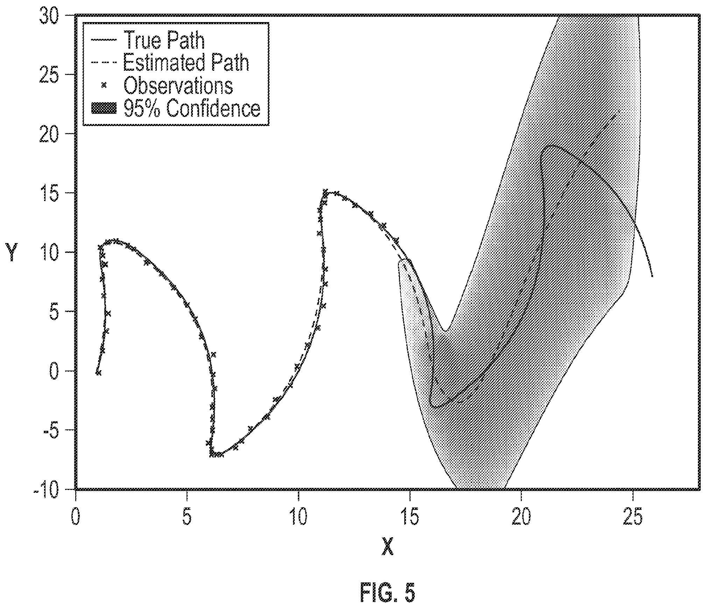

FIG. 5 is a plot of a predicted trajectory using GP regression, according to an embodiment of the present disclosure. The x-axis corresponds to the x-dimension and the y-axis corresponds to the y-dimension. The trajectory is assumed to occur in a two-dimensional (2D) plane x-y.

In an embodiment, to generate trajectories that achieve the specified goal, a significant number of dynamically feasible trajectories for each agent (vehicle) is randomly sampled. The dynamically feasible trajectories obey both dynamic constraints and environmental constraints. The number of trajectories can be one or more trajectories. For example, the trajectories are collision free and remain within bounds of the environment. Each discretized trajectory is sampled over a fixed horizon *H* at fixed time intervals so that each candidate trajectory can have states at timesteps *t*, *t* + 1, ... , *t* + *H*.

Next, the fitness of each trajectory is evaluated, and the trajectory that maximizes the fitness is selected. In an embodiment, sensor detections (sensor data) are modeled as proportional to a normal probability density function defined by equation (1).

$$\rho_t^i(x) = \frac{1}{2\pi\sqrt{|\Sigma|}} e^{-\frac{1}{2}(x-\mu)^T \Sigma^{-1}(x-\mu)} \tag{1}$$

with a mean vector $\mu$ and a covariance matrix $\Sigma$ for agent *i* at time *t*.

In an embodiment, the sensor model is considered to be centered at the two-dimensional location $x^a$, i.e., $\mu = x^a$ of the agent (vehicle). Given a detection radius $r^D$, the covariance matrix is set to be a scaled two-dimensional identity matrix with a magnitude of one half of the detection radius, i.e., $\Sigma = \frac{1}{2} r^D I$. Intuitively, this formulation encodes the idea that targets are more likely to be detected if the targets are close to the agent (vehicle).

Using the predictive method, we obtain a predicted mean $\tilde{\mu}_t^j$ and a covariance $\tilde{\Sigma}_t^j$. This induces a corresponding normal distribution for the target location of be provided by the expression (2).

$$\phi_t^j(x) \sim \mathcal{N}(\tilde{\mu}_t^j, \tilde{\Sigma}_t^j). \tag{2}$$

The integral of the product of $p_t^i$ and $\phi_t^j$ can be used as a metric to quantify how well agent *i* tracks target *j* at a time t. This can be expressed with the expression (3).

$$S_t(i,j) = \int_{\mathcal{E}} \rho_t^i(x) \phi_t^j(x). \tag{3}$$

To quantify the tracking performance over the entire sampled trajectory, the sum of $S_t(i,j)$ over the entire horizon is calculated, as shown in (4) to quantify how well the trajectory of agent *i* trajectory tracks target *j*.

$$S(i,j) = \sum_{t}^{t+H} S_t(i,j) \tag{4}$$

To measure the performance of agent *i* for each target, the following vector is provided using expression (5).

$$S(i) = [S(i,1), S(i,2), ..., S(i,M)] \tag{5}$$

where *M* is the number of targets.

This vector is compared to a desired user-supplied tracking objective given by the following expression (6).

$$S^* = [s_1^*, s_2^*, \ldots, s_M^*] \tag{6}$$

where $s_j^*$ is the relative importance weight assigned to target *j*. Note that, there is no dependence on the agents (vehicles) in $S^*$, as relative importance is assigned to each target regardless of how many agents are present.

A comparison is performed to compare how closely vector (5) matches tracking objective (6) using the chi-squared test (assuming both *S(i)*, and, *S\** are normalized), as expressed in expression (7).

$$\chi^2(i) = \sum_{j=1}^{M} \frac{(S(i,j) - s_j^*)^2}{S(i,j) + s_j^*} \qquad (7)$$

A trajectory $X^i = [x_t^i, x_{t+1}^i, \ldots, x_{t+H}^i]$ is then selected such that chi-squared test in expression (7) is minimized, i.e., as expressed in expression (8).

$$\min_{X^i} \chi^2(i). \qquad (8)$$

If more than one agent (vehicle) is used, trajectories are assigned sequentially. The first agent (first vehicle) ($i$ = 1) selects its trajectory normally, and then passes the score vector $S^*(1)$ corresponding to its selected trajectory. When the next agent (next vehicle) ($i$ = 2) evaluates its sampled trajectory, the next agent adds $S^*(1)$ to its objective, i.e., as expressed in expression (9).

$$\chi^2(2) = \sum_{j=1}^{M} \frac{((\widehat{S^*(1,j) + S(2,j)}) - s_j^*)^2}{(\widehat{S^*(1,j) + S(2,j)}) + s_j^*} \qquad (9)$$

where $(\widehat{S^*(1) + S(2,j)})$ is the normalized sum such that $\Sigma_j S^*(1,j) + S(2,j) = 1$. This is again repeated for the next agent, with agent (vehicle) ($i$ = 3) using the sum of $S^*(1) + S^*(2)$. Each agent uses the contributed scores from the prior agents.

To incorporate prior information, any arbitrary distribution can be approximated as a sum of Gaussians. For example, to use a uniform prior information (which may be input by a user or gathered from prior positions of the vehicle) and maximize uniform exploration, a fixed number of identical Gaussian components can be distributed across the environment. A uniform distribution has the same value across the entire space meaning that no one area is more likely to contain a target than any other. Then, each component can be treated as a fake target. The score $S$ is calculated, and the desired importance weight $S^*$ is selected to balance exploration of the prior with tracking of existing targets.

At each time step, the predicted target tracks are updated with observations and, then, the agent trajectories are generated to track targets and/or to explore priors as specified by the user-defined vector $S^*$. Note that $S^*$ defines both the relative importance between different targets (e.g., one target is twice as important as another) and the balance between exploring the environment. Once an agent (selects) selects an optimal trajectory, the agent (vehicle) executes only the first step in that trajectory. At the next timestep, a new trajectory is selected in a receding horizon fashion.

In an embodiment, a Gaussian Mixture Model (GMM) Filter implements the GP regression target trajectory prediction described above. Given a series of observations passed as observation data classes, the GMM Filter stores the observations for each target. Based on these stored observations, the GMM Filter can then make predictions about a location of each target along with the uncertainty associated with each prediction. The result is returned as a Gaussian Mixture Model (GMM), with each component of the GMM associated with the prediction of a single target.

In an embodiment, each agent is represented as an instance of the agent class, which stores the current state of the agent (vehicle). For example, the current state of the agent may be the detected position of the agent or the assumed position of the agent. To generate a trajectory for the agent (vehicle), one may call the "get_predictive_ergodic_trajectory" method with the predictions from the GMM filter and the current score contributions of other agents (vehicles). Once an agent computes its own trajectory, the agent adds its contribution to the total team score and passes the team score to the next agent that is waiting to plan its trajectory.

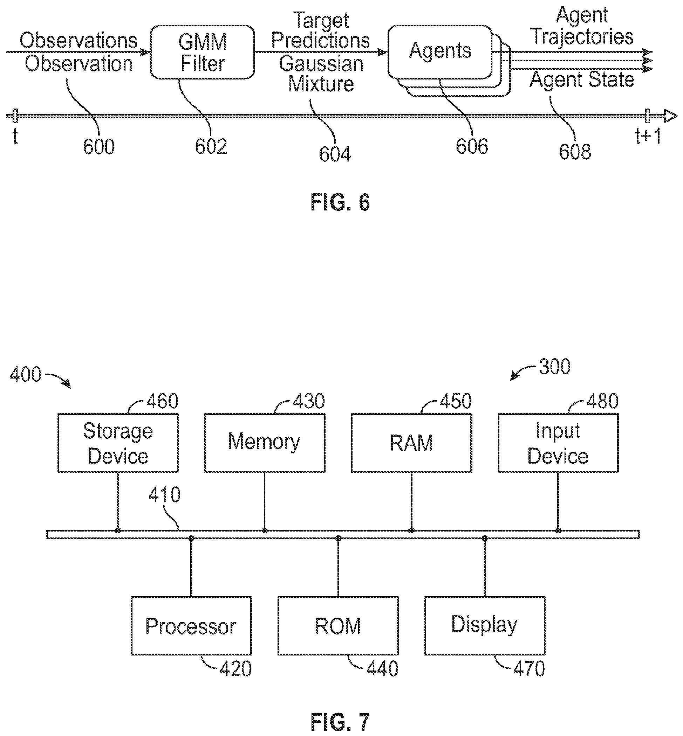

FIG. 6 is a block diagram of the two main components used for target prediction and trajectory generation (GMM and agent or vehicles), and the information that flows between the components for a single time step, according to an embodiment of the present disclosure. As shown in FIG. 6, observations 600 are input into a GMM filter 602. The GMM filter 602 outputs target predictions 604 that are input into the various agents (vehicles) 606. The agents 606 alter their trajectories (agent trajectories) 608 based on the target predictions 604. The agent state includes the position, the orientation, and the velocity of the vehicle.

FIG. 7 is a block diagram of a computer system 300 (shown in FIG. 3), according to an embodiment of the present disclosure. With reference to FIG. 7, the computer system 300 includes a computing device 400, including a processing unit (e.g., a CPU or a processor) 420 and a system bus 410 that couples various system components, including the system memory 430, such as a read-only memory (ROM) 440 and a random-access memory (RAM) 450 to the processor 420. The computing device 400 can include a cache of high-speed memory connected directly with, in close proximity to, or integrated as part of the processor 420. The computing device 400 copies data from the system memory 430 and/or the storage device 460 to the cache for quick access by the processor 420. In this way, the cache provides a performance boost that avoids processor 420 delays while waiting for data. These and other modules can control or be configured to control the processor 420 to perform various actions. Other system memory 430 may be available for use as well. The system memory 430 can include multiple different types of memory with different performance characteristics. The disclosure may operate on the computing device 400 with more than one processor 420 (e.g., multi-core processors) or on a group or a cluster of computing devices networked together in a distributed computing environment to provide greater processing capability. The processor 420 can include any general-purpose processor and a hardware module or a software module, as well as a special-purpose processor where software instructions are incorporated into the actual processor design. The processor 420 may essentially be a completely self-contained computing system, containing multiple cores or processors, a bus, a memory controller, a cache, etc. A multi-core processor may be symmetric or asymmetric.

The system bus 410 may be any of several types of bus structures, including a memory bus or a memory controller, a peripheral bus, and a local bus using any of a variety of bus architectures. A basic input/output (BIOS) stored in memory ROM 440, or the like, may provide the basic routine that helps to transfer information between elements within the computing device 400, such as during start-up. The computing device 400 further includes storage devices 460, such as a hard disk drive, a magnetic disk drive, an optical disk drive, a tape drive, or the like. Other hardware or software modules are contemplated. The storage device 460 is connected to the system bus 410 by a drive interface. The drives and the associated computer-readable storage media provide nonvolatile storage of computer-readable instructions, data structures, program modules, and other data for the computing device 400. In one aspect, a hardware module that performs a particular function includes the software component stored in a tangible computer-readable storage medium in connection with the necessary hardware components, such as the processor 420, the system bus 410, the output device 470 (e.g., display), and so forth, to carry out the function. In another aspect, the system can use a processor and a computer-readable storage medium to store instructions that, when executed by the processor, cause the processor to perform a method or other specific actions. The basic components and appropriate variations are contemplated depending on the type of device, such as whether the computing device 400 is a small, handheld computing device, a desktop computer, or a computer server.

The storage device 460 can be a hard disk or other computer-readable media that can store data accessible by a computer, such as magnetic cassettes, flash memory cards, digital versatile disks, cartridges, etc. The storage device 460 can be a network attached storage (NAS) device. Non-transitory tangible computer-readable storage media, computer-readable storage devices, or computer-readable memory devices, expressly exclude media such as transitory waves, energy, carrier signals, electromagnetic waves, and signals, per se.

To enable user interaction with the computing device 400, an input device 480 represents any number of input mechanisms, such as a microphone for speech, a touch-sensitive screen for gesture or a graphical input, a keyboard, a mouse, motion input, speech, and so forth. An output device 470 can be a display or one or more of a number of output mechanisms known to those of skill in the art. In some instances, multimodal systems enable a user to provide multiple types of input to communicate with the computing device 400. There is no restriction on operating on any particular hardware arrangement and, therefore, the basic features here may easily be substituted for improved hardware or firmware arrangements as they are developed.

A probabilistic modeling approach is adopted to represent both the search area and possible locations of the targets, offering a consistent evaluation space for optimization. A decentralized path planning algorithm is provided to trade-off and/or balance between the search area and the target tracking objective, utilizing the ergodicity metrics. The resultant framework is resilient to bandwidth limitation. The resultant framework is also flexible to adding or removing vehicles.

In an embodiment, each vehicle in a plurality of vehicles is equipped with a sensor to detect and to track targets. Each vehicle broadcasts signals and receives sensing information from neighboring vehicles in a communication network. The communication network forms a fully connected graph. The plurality of vehicles can plan their own path based on the latest information from the target and based on locations of other agents. A path planning algorithm of the vehicle is used to balance between searching areas with a potential target, or tracking a previously detected target. The trade-off can either be users/operator specified, or according to some optimization criterion or criteria. For example, the optimization criterion or criteria can be used to maximize a number of new target detection (exploration), and/or to persistently track a target once the target is found (exploitation), probabilistic modeling approach (for example, a Gaussian mixture model) with regression can be employed to predict future trajectory of the target along with an associated uncertainty of the trajectory, based on past observations of the trajectory. This approach also allows desired search locations to be represented as probabilistic models with user-specified importance along with the associated uncertainties of the desired search locations.

The planning of the path of the vehicle can be fully decentralized. Each vehicle can be assigned a unique identifier (ID) informing a priority of the vehicle and also informing that the path planning happens sequentially according to the priority of the vehicle. In an embodiment, a first vehicle selects a first trajectory and broadcasts a path score of the first trajectory of the first vehicle to the plurality of vehicles (e.g., a group of vehicles). A second vehicle (subsequent vehicle) incorporates a path score of the first trajectory of the first vehicle (previous agent) when planning a second trajectory of the second vehicle. This provides the ability for the second vehicle to avoid searching the same area or tracking the same target as did the first vehicle. The resultant collaborative approach ensures the plurality of vehicles coordinate their effort between searching and tracking.

Further aspects are provided by the subject matter of the following clauses.

A method of decentralized collaborative target searching, target tracking, or both, including: (a) initializing, using a computer system, a probability distribution over a probabilistic search area with an a priori probability distribution of target locations, (b) transmitting, by the computer system, the probability distribution of target locations to a plurality of vehicles, (c) causing, by the computer system, a plurality of sensors on the plurality of vehicles to capture sensor data relating to locations of a target, (d) updating, by the computer system, the a priori probability distribution of target locations based on the captured sensor data or based on data observations outside of the plurality of vehicles, or both, to provide an updated probability distribution of target locations, (e) determining, by the computer system, optimal trajectories for the plurality of vehicles using the updated probability distribution of target locations and using an ergodic principle to define optimality, wherein the determining of optimal trajectories is based on each vehicle of the plurality of vehicles calculating its own optimal trajectory to enable decentralized calculations and providing results of the decentralized calculations to the computer system, (f) detecting or tracking, or both, the target based on the determining of the optimal trajectories, and (g) storing a result of the detecting or tracking on a storage device or transmitting the result to a requesting source.

The method according to the preceding clause, further including updating the updated probability distribution of target locations with observations outside of the plurality of vehicles or other probability distributions.

The method according to any preceding clause, wherein each of the plurality of vehicles broadcasts signals and receives signals from neighboring vehicles of the plurality of vehicles.

The method according to any preceding clause, wherein each vehicle of the plurality of vehicles calculates its own optimal trajectory based on a latest information from the target and based on locations of other vehicles of the plurality of vehicles.

The method according to any preceding clause, further including selecting a first trajectory by a first vehicle of the plurality of vehicles; broadcasting a trajectory score of the first trajectory to other vehicles of the plurality of vehicles; and using the trajectory score of the first trajectory by a second vehicle of the plurality of vehicles to plan a second trajectory of the second vehicle.

The method according to any preceding clause, wherein the plurality of vehicles include at least one of an aircraft, a ground vehicle, a floating vehicle, or a submarine.

The method according to any preceding clause, wherein the aircraft includes an unmanned aerial vehicle (UAV).

The method according to any preceding clause, wherein the a priori probability distribution is derived from a last known location of the target, or an estimate on how far the target can travel since last detected.

The method according to any preceding clause, wherein the target includes a plurality of targets, and the targets can be ranked according to importance using a probability distribution.

The method according to any preceding clause, wherein calculating the optimal trajectories for the plurality of vehicles using the updated probability distribution of target locations includes balancing operations of the plurality of vehicles between an operation of searching areas for a potential target and an operation of tracking a previously detected target.

The method according to any preceding clause, wherein the balancing operations of the plurality of vehicles between the operation of searching areas for the potential target and the operation of tracking the previously detected target is performed according to an optimization criterion including maximizing a number of new target detection or persistently tracking a target once the target is found.

The method according to any preceding clause, wherein calculating the optimal trajectories for the plurality of vehicles using the updated probability distribution of target locations and using an ergodic principle to define optimality includes calculating optimal trajectories for the plurality of vehicles using a probabilistic modeling approach.

The method according to any preceding clause, wherein the probabilistic modeling approach includes a Gaussian mixture model with regression.

The method according to any preceding clause, further including predicting a future trajectory of the target along with an associated uncertainty of the future trajectory based on past observations of trajectory using the Gaussian mixture model with regression.

The method according to any preceding clause, wherein detecting or tracking, or both, the target based on the decentralized calculations of the optimal trajectories includes predicting a future motion of the target using a Gaussian process (GP) regression.

The method according to any preceding clause, wherein the target has two associated GP regressions, one GP regression for each dimension.

The method according to any preceding clause, wherein the two associated GP regressions are fitted using produced observations.

The method according to any preceding clause, further including computing a standard deviation associated with the predicting a future motion of the target using a Gaussian process (GP) regression.

The method according to any preceding clause, wherein the GP regression is implemented using a Gaussian Mixture Model (GMM) filter.

The method according to any preceding clause, further including storing observations of the target using the GMM filter, and making predictions about a location of the target along with uncertainty associated with the prediction using the GMM filter, based on the stored observations of the target.

The method according to any preceding clause, further including evaluating, by the computer system, fitness of each trajectory of each of the plurality of vehicles, and selecting a trajectory that maximizes the fitness.

The method according to any preceding clause, further including, modeling, by the computer system, sensor data by the plurality of sensors on the plurality of vehicles as proportional to a normal probability density function defined by equation (1):

$$\rho_t^i(x) = \frac{1}{2\pi\sqrt{|\Sigma|}} e^{-\frac{1}{2}(x-\mu)^T \Sigma^{-1}(x-\mu)} \tag{1}$$

with a mean vector $\mu$ and a covariance matrix $\Sigma$ for agent $i$ at time $t$.

A non-transitory computer-readable medium storing instructions that, when executed by a processor of the computer system, cause the processor to perform the method of decentralized collaborative target searching, target tracking, or both, the method including: (a) initializing a probability distribution over a probabilistic search area with an a priori probability distribution of target locations, (b) transmitting the probability distribution of target locations to a plurality of vehicles, (c) causing a plurality of sensors on the plurality of vehicles to capture sensor data relating to locations of a target, (d) updating the a priori probability distribution of target locations based on the captured sensor data or based on data observations outside of the plurality of vehicles, or both, to provide an updated probability distribution of target locations, (e) determining optimal trajectories for the plurality of vehicles using the updated probability distribution of target locations and using an ergodic principle to define optimality, wherein the determining of optimal trajectories is based on each vehicle of the plurality of vehicles calculating its own optimal trajectory to enable decentralized calculations and providing results of the decentralized calculations to the computer system, (f) detecting or tracking, or both, the target based on the determining of the optimal trajectories, and (g) storing a result of the detecting or tracking on a storage device or transmitting the result to a requesting source.

The non-transitory computer-readable medium according to the preceding clause, wherein the method includes updating the updated probability distribution of target locations with observations outside of the plurality of vehicles or other probability distributions.

The non-transitory computer-readable medium according to any preceding clause, wherein each of the plurality of vehicles broadcasts signals and receives signals from neighboring vehicles of the plurality of vehicles.

The non-transitory computer-readable medium according to any preceding clause, wherein each vehicle of the plurality of vehicles calculates its own optimal trajectory based on a latest information from the target and based on locations of other vehicles of the plurality of vehicles.

The non-transitory computer-readable medium according to any preceding clause, wherein the method includes selecting a first trajectory by a first vehicle of the plurality of vehicles; broadcasting a trajectory score of the first trajectory to other vehicles of the plurality of vehicles; and using the trajectory score of the first trajectory by a second vehicle of the plurality of vehicles to plan a second trajectory of the second vehicle.

The non-transitory computer-readable medium according to any preceding clause, wherein the plurality of vehicles include at least one of an aircraft, a ground vehicle, a floating vehicle, or a submarine.

The non-transitory computer-readable medium according to any preceding clause, wherein the aircraft includes an unmanned aerial vehicle (UAV).

The non-transitory computer-readable medium according to any preceding clause, wherein the a priori probability distribution is derived from a last known location of the target, or an estimate on how far the target can travel since last detected.

The non-transitory computer-readable medium according to any preceding clause, wherein the target includes a plurality of targets, and the targets can be ranked according to importance using a probability distribution.

The non-transitory computer-readable medium according to any preceding clause, wherein the method includes calculating the optimal trajectories for the plurality of vehicles using the updated probability distribution of target locations includes balancing operations of the plurality of vehicles between an operation of searching areas for a potential target and an operation of tracking a previously detected target.

The non-transitory computer-readable medium according to any preceding clause, wherein the balancing operations of the plurality of vehicles between the operation of searching areas for the potential target and the operation of tracking the previously detected target is performed according to an optimization criterion including maximizing a number of new target detection or persistently tracking a target once the target is found.

The non-transitory computer-readable medium according to any preceding clause, wherein the method includes calculating optimal trajectories for the plurality of vehicles using a probabilistic modeling approach.

The non-transitory computer-readable medium according to any preceding clause, wherein the probabilistic modeling approach includes a Gaussian mixture model with regression.

The non-transitory computer-readable medium according to any preceding clause, wherein the method further includes predicting a future trajectory of the target along with an associated uncertainty of the future trajectory based on past observations of trajectory using the Gaussian mixture model with regression.

The non-transitory computer-readable medium according to any preceding clause, wherein detecting or tracking, or both, the target based on the decentralized calculations of the optimal trajectories includes predicting a future motion of the target using a Gaussian process (GP) regression.

The non-transitory computer-readable medium according to any preceding clause, wherein the target has two associated GP regressions, one GP regression for each dimension.

The non-transitory computer-readable medium according to any preceding clause, wherein the two associated GP regressions are fitted using produced observations.

The non-transitory computer-readable medium according to any preceding clause, wherein the method further includes computing a standard deviation associated with the predicting a future motion of the target using a Gaussian process (GP) regression.

The non-transitory computer-readable medium according to any preceding clause, wherein the GP regression is implemented using a Gaussian Mixture Model (GMM) filter.

The non-transitory computer-readable medium according to any preceding clause, wherein the method further includes storing observations of the target using the GMM filter, and making predictions about a location of the target along with uncertainty associated with the prediction using the GMM filter, based on the stored observations of the target.

The non-transitory computer-readable medium according to any preceding clause, wherein the method further includes evaluating a fitness of each trajectory of each of the plurality of vehicles, and selecting a trajectory that maximizes the fitness.

The non-transitory computer-readable medium according to any preceding clause, wherein the method further includes modeling sensor data by the plurality of sensors on the plurality of vehicles as proportional to a normal probability density function defined by equation (1):

$$\rho_t^i(x) = \frac{1}{2\pi\sqrt{|\Sigma|}} e^{-\frac{1}{2}(x-\mu)^T \Sigma^{-1}(x-\mu)} \tag{1}$$

with a mean vector $\mu$ and a covariance matrix $\Sigma$ for agent $i$ at time $t$.

A system of decentralized collaborative target searching, target tracking, or both, the system including: a plurality of vehicles having a plurality of sensors configured to capture sensor data relating to target locations of a target, and a computer system in communication with the plurality of vehicles, the computer system being configured to: (a) initialize a probability distribution over a probabilistic search area with an a priori probability distribution of the target locations, (b) transmit the probability distribution of target locations to the plurality of vehicles, (c) cause the plurality of sensors on the plurality of vehicles to capture sensor data relating to locations of the target, (d) update the a priori probability distribution of target locations based on the captured sensor data or based on data observations outside of the plurality of vehicles, or both, to provide an updated probability distribution of target locations, (e) determine optimal trajectories for the plurality of vehicles using the updated probability distribution of target locations and using an ergodic principle to define optimality, wherein the determining of optimal trajectories is based on each vehicle of the plurality of vehicles calculating its own optimal trajectory to enable decentralized calculations and providing results of the decentralized calculations to the computer system, (f) detect or track, or both, the target based on the determining of the optimal trajectories, and (g) store a result of the detecting or tracking on a storage device or transmitting the result to a requesting source.

The system according to the preceding clause, wherein the computer system is configured to update the updated probability distribution of target locations with observations outside of the plurality of vehicles or other probability distributions.

The system according to any preceding clause, wherein each of the plurality of vehicles broadcasts signals and receives signals from neighboring vehicles of the plurality of vehicles.

The system according to any preceding clause, wherein each vehicle of the plurality of vehicles calculates its own optimal trajectory based on a latest information from the target and based on locations of other vehicles of the plurality of vehicles.

The system according to any preceding clause, wherein the computer system is configured to select a first trajectory by a first vehicle of the plurality of vehicles; broadcast a trajectory score of the first trajectory to other vehicles of the plurality of vehicles; and use the trajectory score of the first trajectory by a second vehicle of the plurality of vehicles to plan a second trajectory of the second vehicle.

The system according to any preceding clause, whereof the plurality of vehicles include at least one of an aircraft, a ground vehicle, a floating vehicle, or a submarine.

The system according to any preceding clause, wherein the aircraft includes an unmanned aerial vehicle (UAV).

The system according to any preceding clause, wherein the a priori probability distribution is derived from a last known location of the target, or an estimate on how far the target can travel since last detected.

The system according to any preceding clause, wherein the target includes a plurality of targets that are ranked according to importance using a probability distribution.

The system according to any preceding clause, wherein the computer system is configured to balance operations of the plurality of vehicles between an operation of searching areas for a potential target and an operation of tracking a previously detected target.

The system according to any preceding clause, wherein the balancing operations of the plurality of vehicles between the operation of searching areas for the potential target and the operation of tracking the previously detected target is performed according to an optimization criterion including maximizing a number of new target detection or persistently tracking a target once the target is found.

The system according to any preceding clause, wherein the computer system is configured to calculate optimal trajectories for the plurality of vehicles using a probabilistic modeling approach.

The system according to any preceding clause, wherein the probabilistic modeling approach includes a Gaussian mixture model with regression.

The system according to any preceding clause, wherein the computer system is configured to predict a future trajectory of the target along with an associated uncertainty of the future trajectory based on past observations of trajectory using the Gaussian mixture model with regression.

The system according to any preceding clause, wherein the computer system is configured to predict a future motion of the target using a Gaussian process (GP) regression.

The system according to any preceding clause, wherein the target has two associated GP regressions, one GP regression for each dimension.

The system according to any preceding clause, wherein the two associated GP regressions are fitted using produced observations.

The system according to any preceding clause, wherein the computer system is configured to compute a standard deviation associated with the predicting the future motion of the target using the Gaussian process (GP) regression.

The system according to any preceding clause, wherein the GP regression is implemented using a Gaussian Mixture Model (GMM) filter.

The system according to any preceding clause, wherein the computer system is configured to store observations of the target using the GMM filter, and configured to make predictions about a location of the target along with uncertainty associated with a prediction using the GMM filter, based on the stored observations of the target.

The system according to any preceding clause, wherein the computer system is configured to evaluate fitness of each trajectory of each of the plurality of vehicles, and select a trajectory that maximizes the fitness.

The system according to any preceding clause, wherein the computer system is configured to model sensor data by the plurality of sensors on the plurality of vehicles as proportional to a normal probability density function defined by equation (1):

$$\rho_t^i(x) = \frac{1}{2\pi\sqrt{|\Sigma|}} e^{-\frac{1}{2}(x-\mu)^T \Sigma^{-1}(x-\mu)} \tag{1}$$

with a mean vector $\mu$ and a covariance matrix $\Sigma$ for agent $i$ at time $t$.

Although the foregoing description is directed to the preferred embodiments of the present disclosure, other variations and modifications will be apparent to those skilled in the art and may be made without departing from the disclosure. Moreover, features described in connection with one embodiment of the present disclosure may be used in conjunction with other embodiments, even if not explicitly stated above.

**Claims**

**1.** A method of decentralized collaborative target searching, target tracking, or both, the method comprising:

initializing, using a computer system (300), a probability distribution over a probabilistic search area (100) with an a priori probability distribution of target locations (302);

transmitting, by the computer system (300), the probability distribution of target locations to a plurality of vehicles (102A, 104A, 106A, 200, 304);

causing, by the computer system (300), a plurality of sensors (304A) on the plurality of vehicles (102A, 104A, 106A, 200, 304) to capture sensor data (306) relating to locations of a target;

updating, by the computer system (300), the a priori probability distribution of target locations (302) based on the captured sensor data or based on data observations (600) outside of the plurality of vehicles (102A, 104A, 106A, 200, 304), or both, to provide an updated probability distribution of target locations (308);

determining, by the computer system (300), optimal trajectories (102, 104, 106) for the plurality of vehicles (102A, 104A, 106A, 200, 304) using the updated probability distribution of target locations (308) and using an ergodic principle to define optimality, wherein the determining of optimal trajectories (102, 104, 106) is based on each vehicle (102A, 104A, 106A, 200, 304) of the plurality of vehicles (102A, 104A, 106A, 200, 304) calculating its own optimal trajectory (102, 104, 106) to enable decentralized calculations and providing results of the decentralized calculations to the computer system (300);

detecting or tracking, or both, the target based on the determining of the optimal trajectories (102, 104, 106); and

storing a result of the detecting or tracking on a storage device (460) or transmitting the result to a requesting source.

2. The method according to claim 1, further comprising updating the updated probability distribution of target locations (308) with observations (600) outside of the plurality of vehicles (102A, 104A, 106A, 200, 304) or other probability distributions.

3. The method according to any preceding claim, wherein each of the plurality of vehicles (102A, 104A, 106A, 200, 304) broadcasts signals and receives signals from neighboring vehicles (102A, 104A, 106A, 200, 304) of the plurality of vehicles (102A, 104A, 106A, 200, 304).

4. The method according to any preceding claim, wherein each vehicle (102A, 104A, 106A, 200, 304) of the plurality of vehicles (102A, 104A, 106A, 200, 304) calculates its own optimal trajectory (102, 104, 106) based on a latest information from the target and based on locations of other vehicles (102A, 104A, 106A, 200, 304) of the plurality of vehicles (102A, 104A, 106A, 200, 304).

5. The method according to any preceding claim, further comprising selecting a first trajectory (102, 104, 106) by a first vehicle (102A, 104A, 106A, 200, 304) of the plurality of vehicles (102A, 104A, 106A, 200, 304); broadcasting a trajectory score (102C, 104C, 106C) of the first trajectory (102, 104, 106) to other vehicles (102A, 104A, 106A, 200, 304) of the plurality of vehicles (102A, 104A, 106A, 200, 304); and using the trajectory score (102C, 104C, 106C) of the first trajectory (102, 104, 106) by a second vehicle (102A, 104A, 106A, 200, 304) of the plurality of vehicles (102A, 104A, 106A, 200, 304) to plan a second trajectory (102, 104, 106) of the second vehicle (102A, 104A, 106A, 200, 304).

6. The method according to any preceding claim, wherein the plurality of vehicles (102A, 104A, 106A, 200, 304) include at least one of an aircraft, a ground vehicle (102A, 104A, 106A, 200, 304), a floating vehicle (102A, 104A, 106A, 200, 304), or a submarine, and
optionally, the aircraft includes an unmanned aerial vehicle (102A, 104A, 106A, 200, 304) (UAV).

7. The method according to any preceding claim, wherein the a priori probability distribution (302) is derived from a last known location of the target, or an estimate on how far the target can travel since last detected, and
optionally, the target includes a plurality of targets that are ranked according to importance using a probability distribution.

8. The method according to any preceding claim, wherein calculating the optimal trajectories (102, 104, 106) for the plurality of vehicles (102A, 104A, 106A, 200, 304) using the updated probability distribution of target locations (308) comprises balancing operations of the plurality of vehicles (102A, 104A, 106A, 200, 304) between an operation of searching areas for a potential target and an operation of tracking a previously detected target, and
optionally, wherein the balancing operations of the plurality of vehicles (102A, 104A, 106A, 200, 304) between the operation of searching areas for the potential target and the operation of tracking the previously detected target is performed according to an optimization criterion including maximizing a number of new target detection or persistently tracking a target once the target is found.

9. The method according to any preceding claim, wherein calculating the optimal trajectories (102, 104, 106) for the plurality of vehicles (102A, 104A, 106A, 200, 304) using the updated probability distribution of target locations (308) and using the ergodic principle to define the optimality includes calculating optimal trajectories (102, 104, 106) for the plurality of vehicles (102A, 104A, 106A, 200, 304) using a probabilistic modeling approach, and optionally, the probabilistic modeling approach includes a Gaussian mixture model with regression.

10. The method according to claim 9, further comprising predicting a future trajectory (102, 104, 106) of the target along with an associated uncertainty of the future trajectory (102, 104, 106) based on past observations (600) of trajectory (102, 104, 106) using the Gaussian mixture model with regression.

11. The method according to any preceding claim, wherein detecting or tracking, or both, the target based on the decentralized calculations of the optimal trajectories (102, 104, 106) comprises predicting the future motion of the target using the Gaussian process (GP) regression.

12. The method according to claim 11, wherein the target has two associated GP regressions, one GP regression for each dimension.

13. The method according to claim 12, wherein the two associated GP regressions are fitted using produced observations (600).

14. The method according to any of claims 11 to 13, further comprising computing a standard deviation associated with the predicting a future motion of the target using a Gaussian process (GP) regression, and optionally, the GP regression is implemented using a Gaussian Mixture Model (GMM) filter.

15. The method according to claim 14, further comprising storing observations (600) of the target using the GMM filter, and making predictions about a location of the target along with uncertainty associated with a prediction using the GMM filter, based on the stored observations (600) of the target.

FIG. 1

FIG. 2

**Probabilistic Target Detection**

308

Sensor Data

306

304A

304A

Vehicle Team

304A

304

Transmit

303

**Probabilistic Modeling of Targets**

302

Calculate

309

Operator with Computer System

300

Initialize

301

FIG. 3

EP 4 715 512 A1

16

FIG. 4A

FIG. 4B

FIG. 4C

FIG. 4D

FIG. 5

**FIG. 6**

**FIG. 7**

Europäisches
Patentamt

European
Patent Office

Office européen
des brevets

# EUROPEAN SEARCH REPORT

**Application Number**

EP 25 19 5662

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | COFFIN HOWARD ET AL: "Multi-Agent Dynamic Ergodic Search with Low-Information Sensors", 2022 INTERNATIONAL CONFERENCE ON ROBOTICS AND AUTOMATION (ICRA), IEEE, 23 May 2022 (2022-05-23), pages 11480-11486, XP034146077, DOI: 10.1109/ICRA46639.2022.9812037 [retrieved on 2022-07-12] * the whole document * | 1-15 | INV. G05D1/644 G05D1/698 B64C39/02 G05D1/689 ADD. G05D105/55 G05D109/25 |
| A | IAN ABRAHAM ET AL: "Decentralized Ergodic Control: Distribution-Driven Sensing and Exploration for Multi-Agent Systems", ARXIV.ORG, CORNELL UNIVERSITY LIBRARY, 201 OLIN LIBRARY CORNELL UNIVERSITY ITHACA, NY 14853, 13 June 2018 (2018-06-13), XP081140220, DOI: 10.1109/LRA.2018.2849588 * the whole document * | 1-15 | |
| A | DIMITRIS GKOULETSOS ET AL: "Decentralized trajectory optimization for multi-agent exploration", ARXIV.ORG, CORNELL UNIVERSITY LIBRARY, 201 OLIN LIBRARY CORNELL UNIVERSITY ITHACA, NY 14853, 4 July 2021 (2021-07-04), XP091007300, * the whole document * | 1-15 | TECHNICAL FIELDS SEARCHED (IPC) G05D |

-/--

The present search report has been drawn up for all claims

| Place of search | Date of completion of the search | Examiner |
|---|---|---|
| Munich | 17 November 2025 | Etienne, Yves |

EPO FORM 1503 03.82 (P04C01)

page 1 of 2

Europäisches Patentamt

European Patent Office

Office européen des brevets

**EUROPEAN SEARCH REPORT**

Application Number

EP 25 19 5662

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | YU HUILI ET AL: "Probabilistic path planning for cooperative target tracking using aerial and ground vehicles", PROCEEDINGS OF THE 2011 AMERICAN CONTROL CONFERENCE, 1 June 2011 (2011-06-01), pages 4673-4678, XP093336062, DOI: 10.1109/ACC.2011.5990839 ISBN: 978-1-4577-0081-1 Retrieved from the Internet: URL:https://www.et.byu.edu/~beard/papers/preprints/YuMeierArgyle__.pdf> * the whole document * | 1-15 | |

TECHNICAL FIELDS
SEARCHED      (IPC)

The present search report has been drawn up for all claims

| Place of search | Date of completion of the search | Examiner |
|---|---|---|
| Munich | 17 November 2025 | Etienne, Yves |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

................................................................

& : member of the same patent family, corresponding
    document

EPO FORM 1503 03.82 (P04C01)